# FASCICULE DE BREVET EUROPEEN

(11) **EP 0 566 451 B1**
(45) Date de publication et mention de la délivrance du brevet: **08.07.1998**
(21) Numéro de dépôt: 93400902.8
(22) Date de dépôt: 06.04.1993
(51) Int. Cl.: C22B 19/30, C22B 19/04

(54) **Procédé et utilisation d'une installation de récupération de rebuts métalliques**
Verfahren und Verwendung einer Anlage zur Rückgewinnung der Metalle aus Schrott
Process and use of an installation for reclaiming metals from metallic scrap material

(30) Priorité: 07.04.1992 FR 9204237
(43) Date de publication de la demande: 20.10.1993
(73) Titulaire: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: Foulard, Jean, F-94480 Ablon (FR)
(74) Mandataire: Le Moenner, Gabriel

(56) Documents cités:
- FR-A- 2 666 592
- US-A- 4 612 041
- "ZINC AND ITS ALLOYS AND COMPOUNDS, P. 140-143", S.W.K MORGAN, ELLIS HORWOOD LTD, CHICHESTER, WEST SUSSEX (GB), 1985

## Description

L'invention concerne la récupération de rebuts métalliques, à revêtement de zinc, notamment de tôles d'acier zinguées. Généralement, on effectue cette récupération par refonte des rebuts métalliques avec élimination substantielle du zinc superficiel en enfournant ces rebuts métalliques dans un haut fourneau ou dans un four à arc. Cependant, de tels enfournements ne peuvent être faits qu'en quantité très limitée et sont loin de permettre la prise en compte des stocks actuels de tels rebuts métalliques, qui s'amoncellent de façon importante, notamment depuis qu'on utilise des tôles zinguées sur l'une ou les deux faces pour la fabrication de véhicules automobiles. Compte tenu de cette impossibilité de traiter de telles quantités de tôles zinguées en haut-fourneau et au four à l'arc, on a examiné si l'on ne pouvait pas mettre en oeuvre les techniques usuelles de fonderie, à savoir le cubilot ou le four à induction.

En ce qui concerne le cubilot, on a constaté que ce dernier, même lorsqu'il opère à vent chaud, supporte difficilement une charge supérieure à 25 % de ces tôles zinguées. Au-delà, on est confronté à une instabilité de fonctionnement de l'appareil et à un problème d'adaptation des moyens de filtration équipant usuellement les cubilots au traitement des fumées chargées en vapeur de zinc. En ce qui concerne le four à induction, les expériences ont montré une imprégnation du réfractaire du creuset par les vapeurs de zinc qui s'y condensent et conduisent ainsi à des courts-circuits des spires des enroulements inducteurs et, de plus, une certaine quantité de zinc se dissout dans la fonte de base, ce qui, même si cela ne conduit pas à une détérioration des propriétés métallurgiques de la fonte, provoque une pollution très importante et très sérieuse des ateliers de fonderie pendant le transfert en poche de la fonte, au cours duquel s'échappent des vapeurs de zinc particulièrement malsaines pour la santé du personnel environnant.

L'invention a pour objet de récupérer de tels rebuts métalliques zingués de façon simple et efficace, par refusion avec élimination substantielle de l'essentiel des vapeurs de zinc qui se développent, et cet objectif de l'invention est atteint en ce que l'opération de refonte s'effectue sous l'action thermique d'au moins une flamme à combustibles tel gaz naturel, fuel, etc... et d'un comburant constitué par de l'oxygène industriel dans un four de fusion du type rotatif.

Il s'est avéré que ce procédé permet de traiter dans de tels fours des quantités de rebuts métalliques zingués en très grandes proportions, pouvant aller jusqu'à 100 %, sans aucun des inconvénients qui seraient dûs aux vapeurs de zinc et cet effet particulièrement surprenant résulte de ce que ces vapeurs de zinc au contact d'une flamme oxycombustible se transforment pour l'essentiel en oxydes de zinc de forme particulaire qui sont très facilement arrêtés dans les épurateurs à la sortie du four, le débit de fumées d'un four rotatif étant bien inférieur à celui d'un cubilot, de sorte que l'arrêt des particules et/ou vapeurs résiduelles de zinc en est grandement facilité. Le four rotatif à brûleur aéro-combustible ou oxycombustible a été utilisé jusqu'à ce jour comme un substitut du cubilot pour la refonte des ferrailles et fontes. Cependant, malgré ses avantages indéniables, notamment de coûts d'investissement, on n'a jamais imaginé qu'un four rotatif pouvait être utilisé pour la refonte de tôles zinguées, comme le démontre amplement le fait que de tels fours rotatifs à brûleur existent depuis déjà de nombreuses années et qu'un amoncellement sans précédent de tôles zinguées s'est accumulé dans cette même période, sans qu'aucune proposition n'ait été faite à ce jour dans le sens de la solution conforme à la présente invention. Nul doute que les tentatives peu satisfaisantes de refusion de quantités importantes de tels rebuts métalliques "zingués" dans les traditionnelles installations de refusion du genre à cubilot ou four à induction ont dissuadé le monde technique de ce domaine d'imaginer que le four rotatif à brûleur oxycombustible pouvait convenir. Il faut noter à ce sujet que ce n'est pas n'importe quel four rotatif à brûleur qui pouvait à coup sûr convenir et que par exemple, un four à brûleur utilisant de l'air à titre de comburant ne pouvait certainement pas être satisfaisant, car il produirait, du fait de l'important ballast d'azote, un débit de fumées nettement trop exagéré pour permettre l'arrêt des particules de zinc. Au contraire, dans le procédé selon l'invention, où le comburant est de l'oxygène industriel, on réduit au minimum le débit de fumées du four, de sorte que l'opération d'arrêt des particules et vapeur résiduelles de zinc devient économiquement possible.

L'invention vise également l'utilisation d'une installation de fusion pour la récupération de rebuts métalliques à revêtement de zinc, notamment de tôles d'acier dites "zinguées", qui se caractérise en ce que l'installation comporte un four de fusion du type rotatif, équipé d'un brûleur à comburant constitué d'oxygène industriel et d'un dispositif dépoussiéreur disposé dans le conduit de fumées et adapté à retenir au moins une partie substantielle des particules d'oxyde de zinc.

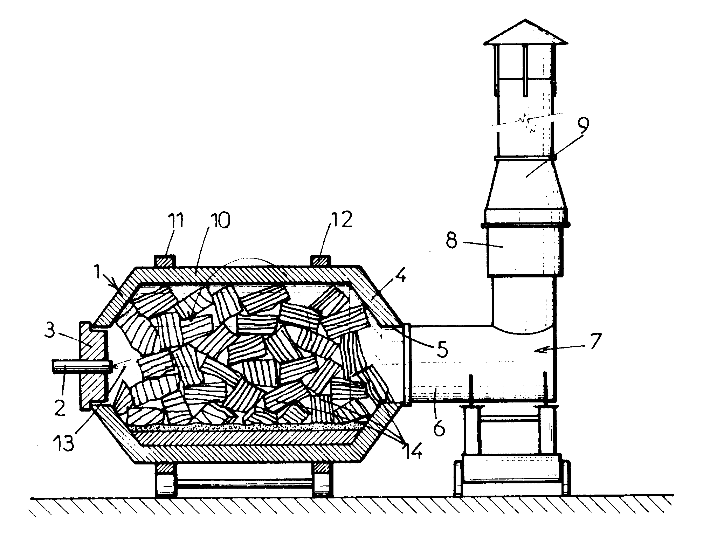

L'invention est maintenant décrite en référence au dessin annexé qui est une vue schématique d'une installation utilisée selon l'invention.

Dans cette installation, un four rotatif 1 présente un corps généralement cylindrique 10 à axe horizontal entraîné à rotation autour de son axe sur des paliers 11 et 12. Le four 1, par exemple tel que décrit dans le document FR-A-2.666.816, comprend une enveloppe métallique et un revêtement intérieur de matériau réfractaire et comporte, à une extrémité axiale, une paroi de fond 3 supportant centralement un brûleur oxycombustible 2, et, à l'extrémité axiale opposée 4, un large orifice ou carneau central 5 débouchant, en configuration normale de fonctionnement, dans un conduit de fumées 7 comportant un tronçon horizontal 6 aligné avec l'axe du four 1 et un tronçon vertical 9 incorporant un dispositif dépoussiéreur approprié 8, comportant par exemple un cyclone et au moins un filtre à poussières.

En opération, une charge complète constituée de paquets de tôles d'acier zinguées 14 est enfournée par le carneau 5 dans le four vide et préalablement préchauffé. Le four 1 est ensuite mis en rotation autour de son axe en même temps que le brûleur 2 est activé avec un mélange oxycombustible et émet une large flamme oxydante 13. Le transfert thermique vers la charge s'effectue à la fois par radiation et convection, ainsi que par conduction du fait des passages de la paroi intérieure de four chauffée par la flamme en contact direct avec la charge de fond de four. La flamme provoque ainsi d'abord une fusion du zinc à une température d'environ 530°C, puis une vaporisation à 900°C. Les vapeurs de zinc émises sont ainsi noyées dans la flamme 13 du brûleur 2, qui présente, selon un aspect de l'invention, un caractère oxydant assez prononcé, du fait de la présence en excès d'oxygène quasi-pur, suffisant pour oxyder une partie substantielle des vapeurs de zinc séparées des substrats d'acier, qui se transforment ainsi en particules d'oxyde de zinc ZnO₂ et, en faible proportion (inférieure à 5 %) ZnO, entraînées par les fumées et aisément arrêtées, de même que les particules de Fe₂O₃ formées en faibles proportions, dans le dispositif dépoussiéreur 8. L'installation, et notamment les moyens d'aspiration dans le conduit de fumées sont avantageusement réglés de façon à créer, dans le four en fonctionnement, une très légère dépression évitant l'émission de particules d'oxydes de zinc dans l'atelier du four.

On obtient ainsi, pour une charge initiale de tôles d'acier zinguées de 1500 kg, environ 1400 kg d'acier réutilisable en fonderie avec une teneur en zinc inférieure à 0,007 %. Le zinc dans les poussières recueillies peut être récupéré par ailleurs. On constate une contamination négligeable par du zinc non oxydé de la garniture réfractaire du four rotatif.

## Revendications

1. Procédé de récupération de rebuts métalliques à revêtement de zinc, notamment de tôles d'acier dites "zinguées", par refonte avec élimination substantielle du zinc superficiel, caractérisé en ce que l'opération de refonte s'effectue dans un four rotatif (1) sous l'action thermique d'au moins une flamme à combustible et à comburant constitué par de l'oxygène industriel.

2. Procédé selon la revendication 1, caractérisé en ce que la flamme est oxydante.

3. Utilisation d'une installation de fusion pour la récupération de rebuts métalliques à revêtement de zinc, notamment de tôles d'acier dites "zinguées", caractérisée en ce que l'installation comporte un four de fusion du type rotatif (1), équipé d'au moins un brûleur (2) à comburant constitué d'oxygène industriel et d'un dispositif dépoussiéreur (8) dans le conduit de fumées (7) adapté à retenir au moins une partie substantielle de particules d'oxydes de zinc.

4. Utilisation selon la revendication 3, caractérisée en ce que le brûleur (2) est disposé centralement dans une paroi d'extrémité axiale (3) du four opposée au conduit de fumées (7).

5. Utilisation selon la revendication 3 ou 4, caractérisée en ce que le four (1) tourne, en configuration de fonctionnement, autour d'un axe horizontal.

## Patentansprüche

1. Verfahren zur Wiederverwertung von metallischen Abfällen mit Zinküberzug, insbesondere von sogenannten "verzinkten" Stahlblechen, durch Umschmelzen unter wesentlicher Beseitigung des Oberflächen-Zinks, dadurch gekennzeichnet, daß das Verfahren des Umschmelzens in einem Drehrohrofen (1) unter thermischer Einwirkung wenigstens einer Flamme aus Brennstoff und aus technischem Sauerstoff gebildetem Sauerstoffträger durchgeführt wird.

2. Verfahren nach Anspruch 1, dadurch gekennzeichnet, daß die Flamme oxidierend ist.

3. Verwendung einer Schmelzanlage zur Wiederverwertung von metallischen Abfällen mit Zinküberzug, insbesondere von sogenannten "verzinkten" Stahlblechen, dadurch gekennzeichnet, daß die Anlage einen Schmelzofen des Rotationstyps (1) aufweist, der ausgerüstet ist mit wenigstens einem Brenner (2) für einen aus technischem Sauerstoff gebildeten Sauerstoffträger und einer Entstaubungsvorrichtung (8) in Rauchabzug (7), die angepaßt ist, wenigstens einen wesentlichen Teil der Zinkoxidpartikel zurückzuhalten.

4. Verwendung nach Anspruch 3, dadurch gekennzeichnet, daß der Brenner (2) zentral in einer axialen, dem Rauchabzug (7) gegenüberliegenden Stirnwand (3) des Ofens angeordnet ist.

5. Verwendung nach Anspruch 3 oder 4, dadurch gekennzeichnet, daß sich der Ofen (1) in Betriebs-Anordnung um eine horizontale Achse dreht.

## Claims

1. Process for reclaiming zinc coated metal scrap, in particular so-called "galvanized" steel sheet, by remelting with substantial elimination of surface zinc, characterized in that the remelting operation is carried out in a rotary furnace (1) under the thermal action of at least one flame supplied with a fuel and an oxidant consisting of industrial oxygen.

2. Process according to claim 1, characterized in that the flame is an oxidizing flame.

3. Use of a melting installation for reclaiming zinc coated metal scrap, in particular so-called "galvanized" steel sheet, characterized in that the installation has a melting furnace of the rotary type (1), equipped with at least one burner (2) supplied with an oxidant consisting of industrial oxygen, and a dust-removal device (8) in the fume duct (7) capable of retaining at least a substantial part of zinc oxide particles.

4. Use according to claim 3, characterized in that the burner (2) is positioned centrally in an axial end wall (3) of the furnace opposite the fume duct (7).

5. Use according to claim 3 or 4, characterized in that the furnace (1) rotates, in its operating configuration, about a horizontal axis.
